Europäisches Patentamt

European Patent Office

Office européen des brevets

(11) Veröffentlichungsnummer: **0 223 095**

A1

## (12) EUROPÄISCHE PATENTANMELDUNG

(21) Anmeldenummer: 86114621.5

(22) Anmeldetag: 22.10.86

(51) Int. Cl.⁴: **B27K 3/38** , B27K 3/34 , A01N 43/84 , //B27K3/50

(30) Priorität: 07.11.85 DE 3539412

(43) Veröffentlichungstag der Anmeldung:
27.05.87 Patentblatt 87/22

(84) Benannte Vertragsstaaten:
AT BE CH DE ES FR GB GR IT LI NL SE

(71) Anmelder: BASF Aktiengesellschaft
Carl-Bosch-Strasse 38
D-6700 Ludwigshafen(DE)
0

(72) Erfinder: Marx, Hans-Norbert
Mozartweg 8
D-7580 Buehl-Weitenung(DE)
Erfinder: Sommer, Horst
Leuschnerstrasse 46
D-6700 Ludwigshafen(DE)
Erfinder: Pommer, Ernst-Heinrich, Dr.
Berliner Platz 7
D-6703 Limburgerhof(DE)
Erfinder: Reuther, Wolfgang, Dr.
Am Pferchelhang 16
D-6900 Heidelberg(DE)

(54) **Holzschutzmittel.**

(57) Holzschutzmittel, enthaltend das Sulfonsäuresalz des N-Tridecyl-2,6-dimethylmorpholins oder des N -(3-p-tert.Butylphenyl-2-methyl-1-propyl)-2,6-dimethylmorpholins und Verfahren zur Bekämpfung von holzschädigenden Pilzen mit diesem Wirkstoff.

EP 0 223 095 A1

## Holzschutzmittel

Die vorliegende Erfindung betrifft ein Holzschutzmittel, welches das Sulfonsäuresalz des N-Tridecyl-2,6-dimethylmorpholins oder des N-(3-p-tert.Butylphenyl-2-methyl-1-propyl)-2,6-dimethylmorpholins als Wirkstoff enthält.

Es ist aus DE 2 461 513 und 2 656 747 bekannt, das Dodecylbenzolsulfonat des N-Tridecyl-2,6-dimethylmorpholins oder des N-(3-p-tert.Butylphenyl-2-methyl-1-propyl)-2,6-dimethylmorpholins in der Landwirtschaft zur Bekämpfung phytopathogener Pilze zu verwenden. Ein Schwerpunkt der Verwendung dieser Wirkstoffe liegt dabei im Getreide in der Bekämpfung echter Mehltaupilze, die zur Pilzklasse der Ascomyceten gehören. Getreiderostpilze, wie Gerstenzwergrost oder Weizenbraunrost, die der Pilzklasse der Basidiomyceten zuzuordnen sind, werden durch diese Wirkstoffe nicht bekämpft.

Es ist ferner bekannt, N-Tridecyl-2,6-trans-dimethyl-morpholin zur Bekämpfung holzzerstörender Pilze wie Coniophora und Polystictus zu verwenden (EP 129 211).

Es wurde nun überraschend gefunden, daß das Salz einer Sulfonsäure mit N-Tridecyl-2,6-dimethylmorpholin oder des N-(3-p-tert.Butylphenyl-2-methyl-1-propyl)-2,6-dimethylmorpholin eine gute Wirksamkeit gegen solche Pilze aufweist, die Holz, insbesondere nicht mehr lebendes Holz, befallen und zerstören. Folgende holzzerstörende Pilze (Basidiomyceten) lassen sich beispielsweise mit dem erfindungsgemäßen Holzschutzmittel bekämpfen: Merulius lacrimans, Coniophora puteana, Lentinus lepideus, Lenzites trabea, Polystictus versicolor, Poria vaporaria.

Sulfonsäuren sind beispielsweise eine Alkansulfonsäure, Alkylarylsulfonsäure, insbesondere die Dodecylbenzolsulfonsäure, endständige Sulfonsäure eines oxalkylierten Fettalkohols, endständige Sulfonsäure eines oxalkylierten Alkylphenols, Perfluoralkylsulfonsäure, alpha-Olefinsulfonsäure oder Alkanethersulfonsäure. Die Dodecylbenzolsulfonsäure wird bevorzugt.

Nicht mehr lebendes (totes) Holz ist beispielsweise Schnittholz, Bauholz, Holzwerkstoffe, z.B. Spanplatten, Holzspäne. Von den beiden Isomeren des N-(3-p-tert.Butylphenyl-2-methyl-1-propyl)-2,6-dimethylmorpholins wird das cis-Isomere, d.h. das Dodecylbenzolsulfonat des N-(3-p-tert.Butylphenyl-2-methyl-1-propyl)-cis-2,6-dimethylmorpholins bevorzugt.

Der Wirkstoff kann in Zubereitungen, wie Lösungen, Emulsionen, Pasten, Anstrichmitteln (z.B. Anstrichfarben, Beizen) und Öldispersionen, ange wendet werden. Die Zubereitungen enthalten im allgemeinen zwischen 0,1 und 90 Gew.% Wirkstoff, vorzugsweise 0,25 bis 50 %. Die Aufwandmengen betragen je nach Art des gewünschten Effektes 0,5 bis 8 g Wirkstoff je m² zu schützender Holzoberfläche bzw. 50 bis 4000 g Wirkstoff je m³ Holz. Anstrichmittel enthalten beispielsweise 0,5 bis 4 Gew.% Wirkstoff. Zum Schutz von Holzwerkstoffen können die Wirkstoffe als Emulsion dem Bindemittel beispielsweise in Mengen von 2 bis 6 Gew.% zugesetzt werden.

Die Anwendung des Wirkstoffs erfolgt in üblicher Weise, z.B. durch Streichen, Spritzen, Sprühen, Tauchen oder Druckimprägnierungs-oder Diffusionsverfahren.

Bevorzugt werden wäßrige Formulierungen verwendet, die mit Hilfe üblicher Hilfsmittel leicht herstellbar sind (z.B. Beispiel 4).

Die folgenden Beispiele sollen die Erfindung erläutern (Prozentangaben in Gew.%).

Beispiel 1

Holzschutzgrundierung farblos

2,00 % Dodecylbenzolsulfonat des N-Tridecyl-2,6-dimethylmorpholins
0,10 % Permethrin
0,50 % Dichlofluanid
6,00 % Leinöl
91,40 % Testbenzin (Kp 180-220°C)

Beispiel 2

Holzschutzlasur, farbig

1,00 % Dodecylbenzolsulfonat des des N-(3-p-tert.Butylphenyl-2-methyl-1-propyl)-2,6-dimethylmorpholins

0,10 % Permethrin
0,50 % Dichlofluanid
15,00 % Alkydharz
3,00 % Butylglykol
3,00 % Eisenoxidpigment
0,20 % Siccativ
77,20 % Testbenzin (Kp 180-220°C)

Beispiel 3

Vakuumimprägnieröl

2,00 % Dodecylbenzolsulfonat des N-Tridecyl-2,6-dimethylmorpholins
0,50 % Dichlofluanid
3,00 % Dibutylphthalat
94,50 % Testbenzin (Kp 180-220°C)

Beispiel 4

Holzschutzgrundierung, wasserverdünnbar

2,00 % Dodecylbenzolsulfonat des N-Tridecyl-2,6-dimethylmorpholins
3,00 % Dimethylalkylbenzylammoniumchlorid
1,00 % Anlagerungsprodukt von Ethylenoxid (EO) an Nonylphenol (etwa 10 Mol EO je Mol Phenol)
3,00 % Essigsäure
5,00 % Propylenglykol
86,00 % Wasser

Zur Vergrößerung des Wirkungsspektrums oder zur Erzielung besonderer Effekte kann der Wirkstoff mit anderen Wirkstoffen kombiniert werden. Als besonders günstig sind Mischungen mit folgenden Verbindungen anzusehen:

Organozinnverbindungen, wie Tributylzinnoxid, Tributylzinnbenzoat und Tributylzinn-Naphthenat
Methylenbisthiocyanat
Dimethylalkylaminsalze
Dimethyldialkylammonium-chloride
Dimethylalkylbenzylammonium-chloride
Trimethylalkylammonium-chloride
Dimethylbipyridinium-chlorid
Cetylpyridinium-chlorid
Chlorierte Phenole, wie Tetra-und Pentachlorphenol
Tetrachlorisophthalsäure-dinitril
2-Halogenbenzoesäureanilid
N-Cyclohexyl-N-methoxy-2,5-dimethyl-furan-3-carbonsäureamid
N,N-Dimethyl-N'-phenyl-(N-fluormethylthio)-sulfamid
N,N-Dimethyl-N'-tolyl-(N-fluormethylthio)-sulfamid
Benzimidazol-2-carbaminsäure-methylester
2-Thiocyanomethyl-thiobenzothiazol
Kupfernaphthenat
Kupfer-8-oxychinolin
Alkali-und Metallsalze des N'-Hydroxy-N-cyclohexyl-diazeniumoxids
1-(1',2',4'-Triazolyl-1')-[1-(4'-chlorphenoxy)]-3,3-dimethylbutan-2-on
1-(1',2',4'-Triazolyl-1')-[1-(4'-chlorphenoxy)]-3,3-dimethylbutan-2-ol
N-[3-(p-tert.-Butylphenyl)-2-methyl-propyl]-cis-2,6-dimethylmorpholin

3

4-[3-(4-(t)-Butylphenyl-2-methyl-propyl]-piperidin
Hexachlorcyclohexan
O,O-Diethyl-o-(α-cyanbenzyliden-amino)-thiophosphat
O,O-Diethyl-o-3.5.6-trichlor-2-pyridil-thiono-phosphat
O,O-Diethyl-dithio-phosphoryl-methyl-6-chlorbenzoxazolon
2-i-Propoxyphenyl-N-methyl-carbamat
N-Methyl-1-naphthyl-carbamat
Norbornen-dimethanolhexa-chlorcyclosulfit
1-(4-Chlorphenyl)-3-(2.6-di-fluorbenzoyl)-harnstoff
1-[2-(2.4-Dichlorphenyl)-1,3-dioxolan-2-yl-ethyl]-1H-1,2,4-triazol
1-[2-(2.4-Dichlorphenyl)-4-ethyl-1,3-dioxolan-2-yl-ethyl]-1H-1,2,4-triazol
1-[2-(2.4-Dichlorphenyl)-4-n-propyl-1,3-dioxolan-2-yl-ethyl]-1H-1,2,4-triazol
    Tributylzinn-N-cyclohexyl-N-hydroxydiazeniumoxid
2-(1,3-Thiazol-4-yl)-benzimidazol
N-Trichlormethylthio-3,6,7,8-tetrahydrophthalimid
N-(1,1,2,2-Tetrachlorethylthio)-3,6,7,8-tetrahydrophthalimid
N-Trichlormethylthiophthalimid
2-N-Octyl-4-isothiazolin-3-on
1,2-Benzisothiazolon-3
O,O-Dimethyl-S-(2-methylamino-2-oxoethyl)-dithiophosphat
O,O-Dimethyl-S-(N-phthalimido)-methyldithiophosphat
6,7,8,9,10,10-Hexachlor-1,5,5a,6,9,9a-hexahydro-6,9-methano-2,3,4-benzodioxothiepin-3-oxyd
2-sek.-Butyl-phenyl-N-methylcarbamat
    Synthetische Pyrethroide, wie
(±)-3-(2.2-Dichlorvinyl-2.2-dimethyl)-cyclopropan-1-carbonsäure-3-phenoxy-benzylester
3-(2.2-Dichlorvinyl-2.2-dimethyl)-cyclopropan-1-carbonsäure-α-cyano-3-phenoxybenzylester
3-(2.2-Dibromvinyl-2.2-dimethyl)-α-cyano-m-phenoxybenzyl(1R,3R)-cyclopropan-carboxylat
α-Cyano-3-phenoxybenzyl-isopropyl-2.4-chlorphenylacetat

Beispiel 5

Zur Herstellung eines öligen Holzschutzmittels mit 1 % Wirkstoff wird zunächst 1 Teil (Gewichtsteil) des Wirkstoffs unter leichtem Erwärmen in 55 Teilen einer aromatenreichen Benzinfraktion gelöst. Anschließend werden 10 Teile eines Alkydharzes zugefügt und bei Raumtemperatur mit Testbenzin auf 100 Teile ergänzt.

Zur Herstellung wasserabweisender Imprägnieranstriche können den öligen Holzschutzmitteln sog. "water repellents" zugesetzt werden. Geeignete Substanzen sind beispielsweise Zinkstearat, Aluminiumstearat, Wachse.

Ferner können zur Erzielung von Farbeffekten feinteilige anorganische oder organische Pigmente oder öllösliche Farbstoffe in die Formulierungen eingearbeitet werden.

Zum Schutz des Holzes gegen Pilzbefall werden üblicherweise 50 bis 200 ml der in Beispiel 5 angeführten öligen Holzschutzmittel je m² Holzoberfläche durch Streichen, Spritzen oder Tauchen aufgebracht.

Anwendungsbeispiel 1

Das Dodecylbenzolsulfonat des N-Tridecyl-2,6-dimethylmorpholins wird in Aceton gelöst, in Mengen von 100, abgestuft bis 3 ppm, einem 5 %igen Malzextraktagar zugesetzt. Der Agar wird in Petrischalen gegossen und nach dem Erstarren werden die fungizidhaltigen Nähragarplatten getrennt mit dem Myzel der holzzerstörenden Pilze Merulius lacrimans (echter Hausschwamm), Coniophora puteana (Kellerschwamm), Lenzites trabea, Polystictus versicolor und Poria vaporaria beimpft. Nach fünftägiger Bebrütung der Schalen bei 25°C wird die Entwicklung der Pilzkolonien auf dem Nährboden im Vergleich mit N-Tridecyl-2,6-trans-dimethylmorpholin (A) und der Kontrolle (ohne Fungizid-Zusatz) beurteilt.

    0 = kein Pilzwachstum (Pilzmyzel abgetötet)
    1 = geringes Pilzwachstum (bis 1/3 der Agaroberfläche bewachsen)
    2 = mittleres Pilzwachstum (bis 2/3 der Agaroberfläche bewachsen)
    5 = ungehemmtes Pilzwachstum (gesamte Agaroberfläche bewachsen)

| Testpilz | ... ppm Wirkstoff-Zusatz zum Nähragar | | | | | | |
|---|---|---|---|---|---|---|---|
| | 100 | 50 | 25 | 12 | 6 | 3 | 0 (Kontrolle) |
| Merulius lacrimans | 0 | 0 | 0 | 0 | 1 | 1 | 5 |
| Coniophora puteana | 1 | 1 | 1 | 1 | 3 | 3 | 5 |
| Lenzites trabea | 0 | 0 | 0 | 0 | 0 | 1 | 5 |
| Polystictus versicolor | 0 | 0 | 0 | 1 | 1 | 3 | 5 |
| Poria vaporaria | 0 | 0 | 0 | 0 | 0 | 0 | 5 |

| Testpilz | ... ppm Zusatz des Wirkstoffs A zum Nähragar | | | | | | |
|---|---|---|---|---|---|---|---|
| | 100 | 50 | 25 | 12 | 6 | 3 | 0 (Kontrolle) |
| Merulius lacrimans | 0 | 0 | 0 | 5 | 5 | 5 | 5 |
| Coniophora puteana | 3 | 3 | 3 | 5 | 5 | 5 | 5 |
| Polystictus versicolor | 0 | 1 | 2 | 4 | 5 | 5 | 5 |

Anwendungsbeispiel 2

Folgende Grenzwerte, d.h. die zum Schutz von 1 m³ Holz erforderliche Menge des Wirkstoffs Dodecylbenzolsulfonat des N-Tridecyl-2,6-dimethylmorpholins wurden nach vorausgegangener Auswaschbeanspruchung gemäß DIN 52 176 ermittelt.

| Pilz | Grenzwert kg Wirkstoff/m³ Kiefernholz |
|---|---|
| Coniophora puteana | 1.4 - 2.2 |
| Poria monticola | 0.5 |
| Lenzites trabea | 0.5 |
| Coriolus versicolor | 1.0 - 1.6 |

Es hat sich gezeigt, daß das Dodecylbenzolsulfonat des N-Tridecyl-2,6-dimethylmorpholins nur wenig oder gar nicht verdunstet, während das N-Tridecyl-2,6-dimethylmorpholin in größeren Mengen verdunstet.

Versuche zur Bestimmung der Verdampfungsgeschwindigkeit

Versuch 1

a) 10 g N-Tridecyl-2,6-dimethylmorpholin (A)
b) 10 g Dodecylbenzolsulfonat des N-Tridecyl-2,6-dimethylmorpholins (B)
Lagerung im Umlufttrockenschrank in Petrischalen 2 Stunden bei 120°C, danach 15 Stunden bei 100°C
Ergebnis:
Während von A 51,4 % (Gew.%) verdunsteten, betrug die Abnahme bei B lediglich 1,1 % (Tabelle 1).

Versuch 2

a) 10 g A
b) 10 g B
Lagerung bei ~ 30°C in gut durchlüftetem Raum in Petrischalen
Ergebnis:
Nach 24 Tagen wurde bei A eine Abnahme von 18,2 % festgestellt, bei B war keine Gewichtsabnahme festzustellen (Tabelle 2).

Versuch 3

a) 0,3 g A
b) 0,63 B (entsprechend 0,3 g A)

Die Verbindungen wurden auf Filterpapier aufgebracht und an trockenem Ort bei etwa 20°C aufgehängt. Es wurden jeweils zwei Proben gespült.

Ergebnis:

Während bei A nach 40 Tagen 66 % verdampft waren, konnte bei B keine Gewichtsabnahme festgestellt werden (Tabelle 3).

Tabelle 1

|   | Einwaage | Gewicht nach 17 Stunden |
|---|---|---|
| A | 10,0 g | 4,86 g |
| B | 10,0 g | 9,89 g |

Tabelle 2

|   | Einwaage | 65 h | 234 h | 24 Tage |
|---|---|---|---|---|
| A | 10,0 | 9,82 | 9,18 | 8,18 |
| B | 10,0 | 10,12 | 10,17 | 10,16 |

Tabelle 3

|   | Einwaage | 3 Tage | 17 Tage | 40 Tage |
|---|---|---|---|---|
| A | 0,3 | 0,28 | 0,15 | 0,10 |
| A | 0,3 | 0,27 | 0,16 | 0,10 |
| B | 0,63 | 0,63 | 0,66 | 0,69 |
| B | 0,63 | 0,63 | 0,64 | 0,65 |

**Ansprüche**

1. Holzschutzmittel, enthaltend einen üblichen Trägerstoff und das Salz einer Sulfonsäure mit N-Tridecyl-2,6-dimethylmorpholin oder N-(3-p-tert.Butylphenyl-2-methyl-1-propyl)-2,6-dimethylmorpholin.

2. Verwendung eines Salzes einer Sulfonsäure mit N-Tridecyl-2,6-dimethylmorpholin oder N-(3-p-tert.Butylphenyl-2-methyl-1-propyl)-2,6-dimethylmorpholin zur Bekämpfung von Pilzen, die Holz schädigen.

3. Verfahren zur Bekämpfung von Pilzen, die Holz schädigen, dadurch gekennzeichnet, daß man die Pilze oder das von Pilzbefall bedrohte Holz mit dem Salz einer Sulfonsäure mit N-Tridecyl-2,6-dimethylmorpholin oder des N-(3-p-tert.Butylphenyl-2-methyl-1-propyl)-2,6-dimethylmorpholin behandelt.

4. Verfahren nach Anspruch 3, dadurch gekennzeichnet , daß man totes Holz behandelt.

5. Verfahren nach Anspruch 3, dadurch gekennzeichnet, daß man ein Salz einer Alkansulfonsäure, einer Alkylarylsulfonsäure, endständige Sulfonsäure eines oxalkylierten Fettalkohols, endständige Sulfonsäure eines oxalkylierten Alkylphenols, einer Perfluoralkylsulfonsäure, einer alpha-Olefinsulfonsäure oder einer Alkanethersulfonsäure verwendet.

6. Verfahren nach Anspruch 3, dadurch gekennzeichnet, daß man das Salz der Dodecylbenzolsulfonsäure verwendet.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| P,X | EP-A-0 193 890 (BASF AG)<br>* Insgesamt *<br><br>--- | 1-6 | B 27 K 3/38<br>B 27 K 3/34<br>A 01 N 43/84 //<br>B 27 K 3/50 |
| D,Y | EP-A-0 129 211 (BASF AG)<br>* Seite 2, Zeilen 6-8; Seite 4, Zeilen 36-41; Seite 6, Zeilen 7-22; Patentansprüche *<br><br>--- | 1-6 | |
| Y | PESTICIDE SCIENCE, Band 15, Nr. 3, Juni 1984, Seiten 285-295, Oxford, GB; E.H. POMMER: "Chemical structure-fungicidal activity relationships in substituted morpholines"<br>* Insgesamt *<br><br>--- | 1-6 | |
| X | EP-A-0 135 112 (Dr. WOLMAN)<br>* Seite 1, Zeile 21 - Seite 2, Zeile 28; Seite 7, Zeile 30 - Seite 8, Zeile 11; Seite 9, Zeilen 6-35; Patentansprüche *<br><br>--- | 1-6 | **RECHERCHIERTE SACHGEBIETE (Int. Cl. 4)**<br><br>B 27 K<br>A 01 N |
| X | CHEMICAL ABSTRACTS, Band 95, Nr. 8, 24. August 1981, Seite 92, Zusamefassung Nr. 63932n, Columbus, Ohio, US; A. SUJAN et al.: "Some studies on fungal deterioration of rubber wood (Hevea brasiliensis)", & MEDED. FAC. LANDBOUWWET., RIJKSUNIV. GENT 1980, 45(5), 1255-60<br>* Zusammenfassung *<br><br>---     -/- | 1-6 | |

Der vorliegende Recherchenbericht wurde für alle Patentansprüche erstellt.

| Recherchenort | Abschlußdatum der Recherche | Prüfer |
|---|---|---|
| DEN HAAG | 11-02-1987 | FLETCHER A.S. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | EP-A-0 066 196 (BASF AG)<br>* Seite 2, Zeile 9 - Seite 3, Zeile 7; Seite 12, Zeilen 10-15; Patentansprüche * | 1-6 | |
| | --- | | |
| D,A | DE-A-2 461 513 (BASF AG)<br>* Patentansprüche * | 1-6 | |
| | --- | | |
| D,A | DE-A-2 656 747 (BASF AG)<br>* Patentansprüche; Seite 4, Zeilen 30-37 * | 1-6 | |
| | ----- | | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 11-02-1987 | FLETCHER A.S. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82